# EUROPEAN PATENT SPECIFICATION

(11) **EP 2 342 284 B1**
(45) Date of publication and mention of the grant of the patent: **30.09.2015**
(21) Application number: 09737483.9
(22) Date of filing: 30.09.2009
(51) Int. Cl.: C09D 4/00

(54) **COATING COMPOSITION FOR ACRYLIC MATERIAL AND USES THEREOF**
ZUSAMMENSETZUNG ZUR BESCHICHTUNG VON GEGENSTÄNDEN AUS ACRYL UND DESSEN VERWENDUNG.
COMPOSITION DE REVÊTEMENT POUR MATÉRIAU ACRYLIQUE, SYSTÈME ACRYLIQUE RENFORCÉ DOTÉ DE LADITE COMPOSITION DE REVÊTEMENT, ET UTILISATIONS AFFÉRENTES

(30) Priority: 30.09.2008 PT 10420108
(43) Date of publication of application: 13.07.2011
(73) Proprietor: Portcril - Sociedade Portuguesa De Acrílicos, S.a., 4410-510 Arcozelo, VNG (PT)
(72) Inventor: TEIXEIRA, José Francisco de Lima, 3700-499 Arrifana - VFR (PT)
(74) Representative: Alves Moreira, Pedro
(86) International application number: PCT/PT2009/000050
(87) International publication number: WO 2010/039053

(56) References cited:
- EP-A- 1 152 014

## Description

### FIELD OF THE INVENTION

The present invention is related to coating compositions. More particularly, the present invention is related to coating compositions for acrylic materials.

### BACKGROUND OF THE INVENTION

At present, the production of industrial articles generally designated by "SPA" is globally spread and with an increasing demand. Such articles are intended to relaxation and treatment by means of hydromassage and they have evolved from the traditional "thermal springs". The designation "SPA" came from the Roman expression *Salut Per Aqua -* "health by water". Actually, "SPA" may be described as collective bathtubs, with large dimensions, which have whirlpool systems with hot and cold water. These bathtubs allow for domestic hydromassage treatments aiming to achieve a good blood-circulation and muscular relaxation.

The production of such articles has currently some problems and limitations. In fact, in the production of large dimension equipments for collective use, for instance 2, 3 or more users, pre-coloured acrylic sheets having limited standard colours are used. In addition, no decorative customized articles are currently available. This is a major drawback as it prevents a differentiation with respect to the market pull. The majority of SPA manufacturers purchase these sheets from the same acrylic suppliers, therefore in terms of colour every "SPA" is similar.

The use of paint coating on the acrylic material does not solve the above drawback due to adhesion problems of the standard painting processes, also causing cracking of the acrylic material due to chemical solvent attack, significantly affecting durability and visual appearance. Moreover, the conventional painting processes are time-consuming and expensive due to the application of several coating layers to achieve an acceptable surface quality and also the need of drying procedures to remove paint solvents.

Furthermore, the normal use of the bathtubs with hot water and exposure to radiation, namely UV-light, results in paint cracking and decolouring of the SPAs, significantly reducing its visual and aesthetic properties.

European Patent EP 0781808 B1 discloses compositions containing methacrylate resins that improve the cracking resistance of articles formed from those resins.

European Patent EP 0793689 B1 discloses poly(methyl methacrylate) compositions comprising components to improve flame resistance.

European Patent EP 0571918 B1 relates to a methacrylate resin composition having excellent castability, heat distortion resistance, mechanical strength and chemical resistance, for use in mechanical and electrical parts. This patent discloses a composition for forming articles with an improved cracking resistance when they are subjected to paint solvents and coatings.

US 4238573 relates to poly(methyl methacrylate) compositions having alumina in association with iron oxide pigments to provide a regular colour to structures made from those compositions, for example, structures from the building industry.

These documents disclose compositions from which finished acrylic pieces/sheets may be made with improved features regarding chemical resistance, mechanical strength, flame resistance and the like. However, none of the compositions are suitable for coating acrylic material and to obtain acrylic articles with decorative patterns.

Therefore, there is still a need for new compositions for coating transparent acrylic plates/sheets in order to obtain finished acrylic coloured articles, and in particular articles having coloured decorative patterns.

### SUMMARY OF THE INVENTION

The present invention provides a coating composition for acrylic material, a reinforced acrylic system having decorative patterns made from said coating composition and uses thereof.

In order to overcome the above mentioned prior art drawbacks of paint coating, this invention discloses a new coating composition which surprisingly allows the painting of acrylic sheets. Such composition solves the known adhesion problems of the painting coatings, and is durable enough to withstand the exposure of bathtubs to high temperatures and UV-light. Furthermore, this new coating does not chemically attack the acrylic material thereby providing longer durability.

The present invention further discloses a reinforced acrylic system having polyester resins and glass fibre in organic solvents, having decorative patterns obtained by applying the coating produced from the new composition.

The new coating also functions as an adherence interface between the acrylic piece and the reinforcement member and, as it resists to solvents, it prevents the contact between solvents and the acrylic material, thus avoiding the usual cracking problem related with said contact.

The new coating composition provides a significant improvement in the SPA production, as it allows painting an acrylic sheet with any possible colour or even several colours in order to obtain "SPA" articles with superb decorative finishing and increased durability. On the other hand, the developed formula further allows the coating to be applied in a fast (less than 20 minutes), low-cost, (without need of oven), ecologic (without solvents) and durable (assures structural integrity of the acrylic material) way.

The present invention describes a new approach to solve the problem of the prior art by disclosing a new coating composition for applying to pieces made of acrylic material instead of using it to produce the finished pieces. This new composition provides an improved adherence and solves cracking and discolouring drawbacks associated with coating compositions from the prior art, in addition allowing for the production of embellishing patterns (for example a painting with one or more colours or a painting of decorative patterns) in said acrylic material. Additionally, the coating composition of the invention also allows its use as an improved interface for connecting said acrylic pieces to structural reinforcement members, assuring the above advantages. The coating composition does not damage the acrylic piece, is not damaged by the reinforcement member, and it does not allow the latter to damage the acrylic piece.

Thus, the present invention overcomes the drawbacks of the prior art and solves in a simple and ecologic way the persisting problems resulting from applying coatings to acrylic materials.

According to the present invention there is provided a coating composition for acrylic material comprising: about 73 to 84% by weight of methyl methacrylate; about 4.5 to 11.5% by weight of 2-ethylhexyl acrylate; and about 0.1 to 0.75% by weight of (2-hydroxy-4-methoxyphenyl)phenyl-methanone.

In another aspect of the invention, there is provided a coating composition further comprising dibutyl maleinate, preferably, in the range of about 0.9 to 2.8% by weight.

In yet another aspect of the invention, there is provided a coating composition further comprising N-N-bis-(2-hydroxypropil)-p-toluidine, preferably, in the range of about 0.9 to 2.8% by weight.

In another aspect of the invention, there is provided a coating composition further comprising an anti-UV agent, preferably, in the range of about 0.1 to 0.2 % by weight.

In yet another aspect of the invention, there is provided a coating composition wherein the anti-UV agent is Bis-(2,2,6,6-tetramethyl-4-piperidinyl).

In another aspect of the invention, there is provided a coating composition further comprising a thixotropic agent, preferably, in the range of about 0.9 to 2.8% by weight.

In yet another aspect of the invention there is provided a coating composition further comprising a pigment agent, preferably, in the range of about 4.5 to 6.5% by weight.

In another aspect of the invention, there is provided a coating composition wherein the pigment agent is an inorganic pigment agent.

In a preferred embodiment there is provided a coating composition comprising: about 80% by weight of methyl methacrylate; about 9% by weight of 2-ethylhexyl acrylate; about 0.35% by weight of (2-hydroxy-4-methoxyphenyl)phenyl-methanone; about 1.5% by weight of dibutyl maleinate; about 1.5% by weight of N-N-bis-(2-hydroxypropil)-p-toluidine; about 0.15% by weight of an anti-UV agent; about 1.5% by weight of pyrogenic silica; and about 6% by weight of iron oxide.

According to the present invention there is also provided a reinforced acrylic system comprising base acrylic material, reinforcement material and at least one interface coating therebetween, wherein the at least one interface coating is made from a coating composition as set forth above. Preferably, said base acrylic material is transparent.

In another aspect of the invention, said reinforcement material is made of polyester resins and glass fibre in organic solvents.

In another aspect of the invention, there is provided the use of a coating composition as set forth above for the production of coating and/or painting material for acrylic material.

In yet another aspect of the invention, there is provided the use of a coating composition as set forth above wherein the acrylic material is selected from the group consisting of bathtubs, whirlpool bathtubs, swimming pools, tanks, vessels, containers, reservoirs, chairs or tables.

In another aspect of the invention, there is provided the use of a reinforced acrylic system as set forth above for the production of bathtubs, whirlpool bathtubs, swimming pools, tanks, vessels, containers, reservoirs, chairs, tables and the like.

Throughout the description and claims the word "comprising" and variations of the word, are not intended to exclude other technical features, additives or components. Additional objects, advantages and features of the invention will be apparent to those skilled in the art upon examination of the description or may be learned by practice of the invention. The following examples are provided by way of illustration and are not intended to be limiting of the present invention. Furthermore, the present invention covers all possible combinations of particular and preferred embodiments described herein.

### DETAILED DESCRIPTION OF THE INVENTION

The present application discloses a new coating composition for applying in acrylic materials, preferably transparent acrylic materials, allowing both the decoration of the latter and the application of reinforcement material. The new composition overcomes the adherence and cracking drawbacks of the prior art and allows different, reliable and durable articles to be created.

The term "SPA" is used in this specification by way of example only and does not intend to restrain the scope of the present invention defined in the appended claims.

The coating composition for acrylic material of the present invention comprises:
- about 73 to 84% by weight of methyl methacrylate;
- about 4.5 to 11, 5 % by weight of 2-ethylhexyl acrylate;
- about 0.1 to 0.75% by weight of (2-hydroxy-4-methoxyphenyl)phenyl-methanone;
- about 0.9 to 2.8% by weight of dibutyl maleinate;
- about 0.9 to 2.8% by weight of N-N-bis-(2-hydroxypropil)-p-toluidine;
- about 0,1 to 0,2% by weight of an anti-UV agent;
- about 0.9 to 2.8% by weight of a thixotropic agent; and
- about 4.5 to 6.5% by weight of a pigment agent.

The anti-UV agent may be any of those commonly used and well know by the person skilled in the art, such as Bis-(2,2,6,6-tetramethyl-4-piperidinyl.

The thixotropic agent may be any of those commonly used and well know by the person skilled in the art, such as pyrogenic silica.

The pigment agent may be both organic and inorganic, and may be any of those commonly used and well know by the person skilled in the art, such as iron oxide namely yellow iron oxide, black iron oxide and red iron oxide, phthalocyanine blue, carbon black and titanium dioxide.

In a preferred embodiment, the coating composition of the invention comprises:
- about 80% by weight of methyl methacrylate;
- about 9% by weight of 2-ethylhexyl acrylate;
- about 0.35 % by weight of (2-hydroxy-4-methoxyphenyl)phenyl-methanone;
- about 1.5% by weight of N-N-bis-(2-hydroxypropil)-p-toluidine;
- about 1.5 % by weight of dibutyl maleinate;
- about 0.15% by weight of an anti-UV agent;
- about 1.5 % by weight of pyrogenic silica; and
- about 6 % by weight of iron oxide.

The new coating composition makes possible the production of a paint which is 100% reactive and with no solvents, that is to say, a dual component system (paint and catalyst).

The process for applying the coating onto acrylic is simple and may be carried out, for example, with a paint spray gun, at room temperature and preferably below 30 °C. The "curing" time of the coating is less than 20 minutes, depending on the room temperature.

The new coating adheres in an efficient way to acrylic material, solving common problems of this material concerning its poor surface adhesion for any coating.

The coating composition of the invention allows the production of a new coating with any desired colour. On the other hand, the new coating allows for applying a polyester resin reinforcement without any incompatibility or adhesion problems. In the case of SPAs, for example, the reinforcement is required in the SPA lower part in order to provide the necessary resistance to water and user's weight, whereby the coating composition of the invention serves as an adhesion interface between the acrylic and the reinforcement pieces and at the same time embellishing the article. In this arrangement, the coating has no direct contact with the user thus avoiding any damages, such us scratches.

Also, from the ecological point of view, due to the absence of organic solvents in the composition and as the resulting coating is applied only in one layer, the coating of the present invention has significant advantages over coating/painting of the prior art.

The coating composition of the invention is a new solution allowing to create a new reinforced, efficient and durable acrylic system, which comprises base acrylic material, reinforcement material and an interface coating of the invention therebetween, this latter having a double role of:
a) interface to allow a connection of the reinforcement material to an acrylic piece, and
b) decoration of said acrylic piece.

It should be pointed out that the application field of the coating composition of the invention is very broad, since it allows the painting of any acrylic piece with any colour or combination of colours and/or with decoration and/or commemoratives patterns, and the like.

Therefore, the new reinforced acrylic systems, comprising an interface coating formed from the composition of the invention may be used in the production of all types of bathtubs, namely whirlpool bathtubs (SPA), swimming pools, tanks, reservoirs, containers, chairs, tables and the like.

The following example is the production of a reinforced acrylic piece according to the present invention.

### Example

Two coatings with different colours are made from the compositions according to the invention (see table below).

| **Components from compositions 1 and 2** | **Comp. 1** | **Comp. 2** |
|---|---|---|
| Methyl methacrylate | 80% | 75% |
| 2-ethylhexyl acrylate | 9% | 10.3% |
| (2-hydroxy-4-methoxyphenyl)phenyl-methanone | 0.35% | 0.5% |
| N-N-bis-(2-hydroxypropil)-p-toluidine | 1.5% | 2.5% |
| Dibutyl maleinate | 1.5% | 2.5% |
| Anti-UV agent (Bis-(2,2,6,6-tetramethyl-4-piperidinyl)) | 0.15% | 0.2% |
| Pyrogenic silica | 1.5% | 2.5% |
| Yellow iron oxide | 6% | - |
| Black iron oxide | - | 6.5% |

A transparent acrylic sheet is thermally shaped (moulded), with dies, using heat radiation and vacuum to achieve the desired piece shape, according to known processes.

After moulding, the transparent shell moves to a degreasing stage where the acrylic material is manual cleaned with an aqueous degreasing agent according to known processes.

The next stage is painting the acrylic material with two colours using coating compositions 1 and 2 of the present invention as set forth in the above table. Painting is done by spraying the coating compositions with a paint spray gun, the coatings having different colours either in the outer face or in the lower portion of the outer face of said acrylic shell. Said coatings, after curing at room temperature for a time period of less than 20 minutes, will serve as a base for a reinforcement to be adhered.

Finally, the above piece is reinforced with a polyester resin and glass fibre, by mechanical means, by a spraying machine known by those skilled in the art. This stage is essential to assure the necessary strength and resistance of the piece.

The product so produced does not exhibit any signs of cracking. The product is a compact piece due to strong adherence between its components and is aesthetically distinct due to the superb visual effect produced by said colouring coatings.

Thus, a finished product is achieved which has the necessary features of mechanical strength, and additionally has an appearance which may have been previously chosen by the costumer, for example, the inner surface of a bathtub re-creating the sea bottom.

## Claims

1. A coating composition for acrylic material comprising:
• about 73 to 84% by weight of methyl methacrylate;
• about 4.5 to 11.5 % by weight of 2-ethylhexyl acrylate;
• about 0.1 to 0.75% by weight of (2-hydroxy-4-methoxyphenyl)phenyl-methanone; and
• dibutyl maleinate.

2. The coating composition according to claim 1, wherein dibutyl maleinate is in the range of about 0.9 to 2.8% by weight.

3. The coating composition according to any of preceding claims, further comprising an anti-UV agent.

4. The coating composition according to claim 3, wherein the anti-UV agent is in the range of about 0.1 to 0.2 % by weight.

5. The coating composition according to any of preceding claims, comprising:
• about 80% by weight of methyl methacrylate;
• about 9% by weight of 2-ethylhexyl acrylate;
• about 0.35% by weight of (2-hydroxy-4-methoxyphenyl)phenyl-methanone;
• about 1.5 % by weight of dibutyl maleinate;
• about 1.5% by weight of N-N-bis-(2-hydroxypropil)-p-toluidine;
• about 0.15% by weight of an anti-UV agent;
• about 1.5 % by weight of pyrogenic silica; and
• about 6% by weight of iron oxide.

6. A reinforced acrylic system comprising base acrylic material, reinforcement material and at least one interface coating therebetween, wherein the at least one interface coating is made from the coating composition as set forth in any of claims claim 1 - 5.

7. The reinforced acrylic system according to claim 6, wherein said base acrylic material is transparent.

8. The reinforced acrylic system according to claims 6 or 7, wherein said reinforcement material is made of polyester resins and glass fibre in organic solvents.

9. Use of the coating composition as set forth in any of claims 1 - 5 for the production of coating and/or painting material for acrylic material.

10. Use of coating composition according to claim 9, wherein the acrylic material is selected from the group consisting of bathtubs, whirlpool bathtubs, swimming pools, tanks, vessels, containers, reservoirs, chairs and tables.

11. Use of the reinforced acrylic system as set forth in any of claims 6 - 8 for the production of bathtubs, whirlpool bathtubs, swimming pools, tanks, vessels, containers, reservoirs, chairs and tables.

## Patentansprüche

1. Beschichtungsstoff für Acrylwerkstoff, umfassend:
• ca. 73 bis 84 %-Gewicht von Methyl-Methacrylat;
• ca. 4,5 bis 11,5 %-Gewicht von 2-Ethylhexyl-Acrylat;
• ca. 0,1 bis 0,75 %-Gewicht von (2-Hydroxy-4-Methoxyphenyl)Phenyl-Methanon; und
• Dibutyl-Maleinat.

2. Beschichtungsstoff nach Anspruch 1, wobei Dibutyl-Maleinat im Bereich von ca. 0,9 bis 2,8 %-Gewicht ist.

3. Beschichtungsstoff nach einem der vorhergehenden Ansprüche, weiter ein Anti-UV-Mittel umfassend.

4. Beschichtungsstoff nach Anspruch 3, wobei das Anti-UV-Mittel im Bereich von ca. 0,1 bis 0,2 %-Gewicht ist.

5. Beschichtungsstoff nach einem der vorhergehenden Ansprüche, umfassend:
• ca. 80 %-Gewicht von Methyl-Methacrylat;
• ca. 9 %-Gewicht von 2-Ethylhexyl-Acrylat;
• ca. 0,35 %-Gewicht von (2-Hydroxy-4-Methoxyphenyl)Phenyl-Methanon;
• ca. 1,5 %-Gewicht von Dibutyl-Maleinat;
• ca. 1,5 %-Gewicht of N-N-bis(2-Hydroxypropil)-p-Toluidin;
• ca. 0,15 %-Gewicht von einem Anti-UV-Mittel;
• ca. 1,5 %-Gewicht von pyrogenischer Silika; und
• ca. 6 %-Gewicht von Eisenoxid.

6. Verstärkter Acryl-System umfassend Acryl-Grundstoff, Verstärkungsstoff und am wenigstens eine Schnittstellen-Beschichtung dazwischen, wobei die am wenigstens eine Schnittstellen-Beschichtung aus dem Beschichtungsstoff nach einem der Ansprüche 1 - 5 herstellt wird.

7. Verstärkter Acryl-System nach Anspruch 6, wobei der genannte Acryl-Grundstoff durchsichtig ist.

8. Verstärkter Acryl-System nach Ansprüche 6 oder 7, wobei der genannte Verstärkungsstoff aus Polyesterharzen und Glasfasern in organischen Lösungsmitteln herstellt wird.

9. Verwendung vom Beschichtungsstoff nach einem der Ansprüche 1-5 für die Herstellung von Beschichtungs- und/oder Anstrichstoff für Acrylstoff.

10. Verwendung von Beschichtungsstoff nach Anspruch 9, wobei der Acrylstoff aus der Gruppe umfassend Badewannen, Whirlpool-Badewannen, Schwimmbecken, Tänke, Gefäße, Behälter, Reservoirs, Stühle und Tische ausgewählt wird.

11. Verwendung vom verstärkten Acryl-System nach einem der Ansprüche 6-8 für die Herstellung von Badewannen, Whirlpool-Badewannen, Schwimmbecken, Tänken, Gefäßen, Behältern, Reservoirs, Stühlen und Tischen.

## Revendications

1. Composition de revêtement pour matière acrylique, comprennant:
• environ 73 à 84 % en poids de méthacrylate de méthyle;
• environ 4,5 à 11,5 % en poids d'acrylate de 2-éthylhexyle;
• environ 0,1 à 0,75 % en poids de (2-hydroxy-4-méthoxyphényle)phényl-méthanone; et
• maléinate de dibutyle.

2. Composition de revêtement selon la revendication 1, étant que le maléinate de dibutyle se trouve dans la gamme d'environ 0,9 à 2,8 % en poids.

3. Composition de revêtement selon quelq'une des revendications précédentes, comprennant encore un agent anti-UV.

4. Composition de revêtement selon la revendication 3, étant que l'agent anti-DV se trouve dans la gamme d'environ 0,1 à 0,2 % en poids.

5. Composition de revêtement selon quelq'une des revendications précédentes, comprennant:
• environ 80 % en poids de méthacrylate de méthyle;
• environ 9 % en poids of d'acrylate de 2-éthylhexyle;
• environ 0,35 % en poids de (2-hydroxy-4-méthoxyphényle)phényl-méthanone;
• environ 1,5 % en poids de maléinate de dibutyle;
• environ 1,5 % en poids de N-N-bis(2-hydroxypropyl)-p-toluidine;
• environ 0,15 % en poids d'un agent anti-UV;
• environ 1,5 % en poids de silice pyrogéné; et
• environ 6 % en poids d'oxyde de fer.

6. Système acrylique renforcé, comprennant de la matière acrylique de base, de la matière de renforcement et au moins un revêtement d'interface entre lesdites matières, étant que le revêtement d'interface, au moins un est produit à partir de la composition de revêtement selon quelq'une des revendications 1 - 5.

7. Système acrylique renforcé selon la revendication 6, ladite matière acrylique de base étant transparente.

8. Système acrylique renforcé selon les revendications 6 ou 7, étant que ladite matière de renforcement est produite à partir de résines au polyester et fibre de verre dans des solvants organiques.

9. Emploi de la composition de revêtement selon quelq'une des revendications 1 - 5 pour la production de la matière de revêtement et/ou de peinture pour matière acrylique.

10. Emploi de la composition de revêtement selon la revendication 9, la matière acrylique étant choisie parmi le groupe consistant à des baignoires, des baignoires à tourbillon d'eau, des piscines, des cuves, des bassins, des conteneurs, des réservoirs, des chaises et des tables.

11. Emploi du système acrylique renforcé selon quelq'une des revendications 6 - 8 pour la production de baignoires, de baignoires à tourbillon d'eau, de piscines, de cuves, de bassins, de conteneurs, de réservoirs, de chaises et de tables.
